(19) Europäisches Patentamt
European Patent Office
Office européen des brevets

(11) EP 2 479 586 B1

(12) EUROPÄISCHE PATENTSCHRIFT

(45) Veröffentlichungstag und Bekanntmachung des Hinweises auf die Patenterteilung:
19.03.2014  Patentblatt 2014/12

(51) Int Cl.:
G01S 17/87 (2006.01)          G01S 17/89 (2006.01)
G01S 7/483 (2006.01)

(21) Anmeldenummer: 11000401.7

(22) Anmeldetag: 19.01.2011

(54) **Verfahren zur Abschätzung eines Verunreinigungsgrads einer Frontscheibe einer optischen Erfassungsvorrichtung und optische Erfassungsvorrichtung**

Method for estimating the contamination of a front panel of an optical recording device and optical recording device

Procédé destiné à l'évaluation d'un degré d'impureté d'un disque frontal d'un dispositif de saisie optique et dispositif de saisie optique

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(43) Veröffentlichungstag der Anmeldung:
25.07.2012  Patentblatt 2012/30

(73) Patentinhaber: Sick AG
79183 Waldkirch (DE)

(72) Erfinder:
• Hulm, Christian
79111 Freiburg im Breisgau (DE)

• Möhrle, Manuel
79183 Waldkirch-Buchholz (DE)

(74) Vertreter: Manitz, Finsterwald & Partner GbR
Postfach 31 02 20
80102 München (DE)

(56) Entgegenhaltungen:
EP-A1- 2 182 378          WO-A1-2008/154736
US-A1- 2002 018 198       US-A1- 2010 128 248

**Beschreibung**

Die vorliegende Erfindung betrifft ein Verfahren zur Abschätzung eines Verunreinigungsgrads einer Frontscheibe einer optischen Erfassungsvorrichtung, das das Aussenden von mehreren Sendestrahlungspulsen in einen Erfassungsbereich sowie das Erzeugen eines Empfangssignals für jeden Sendestrahlungspuls umfasst, wobei das Empfangssignal eine Vielzahl von Abtastwerten aufweist und ein Abtastwert jeweils die Intensität der empfangenen Rückstrahlung des jeweiligen Sendestrahlungspulses zu einem Zeitpunkt in einem vorgegebenen zeitlichen Abstand von der Aussendung des Sendestrahlungspulses anzeigt. Die Erfindung betrifft außerdem eine entsprechende optische Erfassungsvorrichtung.

Eine optische Erfassungsvorrichtung, z.B. ein Laserscanner, weist üblicherweise eine Frontscheibe auf, die im Strahlengang zwischen einer Sendeeinheit der optischen Erfassungsvorrichtung und der zu erfassenden Umgebung angeordnet ist.

EP 2 182 378 A1 offenbart einen Laserscanner, der ein Verfahren zur Abschätzung eines Verunreinigungsgrads einer Frontscheibe gemäß dem Oberbegriff des Anspruchs 1 ausführt. Um die Durchlässigkeit der Frontscheibe der optischen Erfassungsvorrichtung zu bewerten, ist der Laserscanner dazu ausgebildet, einen ausgewählten Peak eines empfangenen Empfangssignals mit einer erwarteten Signalform zu vergleichen.

Aufgrund von in dem Empfangssignal vorhandenen Rausch- und weiteren Störeffekten kann dabei eine vorhandene Verunreinigung der Frontscheibe nur mit begrenzter Zuverlässigkeit erkannt und der Verunreinigungsgrad der Frontscheibe nur mit begrenzter Genauigkeit festgestellt werden.

WO 2008/154736 A1 offenbart ein Verfahren zur Erkennung eines Objekts und dessen Entfernung mittels einer optischen Erfassungsvorrichtung mit einer Licht im sichtbaren Bereich ausstrahlenden Lichtquelle, bei dem mehrere Messwerte für einen eine weitere Entfernung repräsentierenden Punkt gemittelt werden.

US 2002/0018198 A1 offenbart ein Verfahren zur Erkennung eines Objekts und dessen Entfernung nach dem Lichtlaufzeitprinzip mittels einer optischen Erfassungsvorrichtung, bei dem eine Zeitkurve eines Empfangssignals aufgezeichnet wird, um den Einfluss einer verschmutzten Frontscheibe der Erfassungsvorrichtung für die Entfernungsmessung eliminieren zu können.

US 2010/0128248 A1 offenbart ein Verfahren zur Erkennung eines Objekts und dessen Entfernung nach dem Lichtlaufzeitprinzip mittels einer optischen Erfassungsvorrichtung, bei dem ein Histogramm aus mehreren Empfangssignalen gebildet wird.

Bei einem anderen Verfahren zur Abschätzung eines Reinigungsgrads einer Frontscheibe werden zusätzliche LEDs verwendet, die Licht aussenden, das die Frontscheibe durchstrahlt und von einer Fotodiode detektiert wird. Eine Verunreinigung der Frontscheibe kann dabei durch Überwachung des Fotodiodenstroms detektiert werden. Die Frontscheibe ist hierbei gegenüber einer Senderichtung des Scanners schräg gestellt, damit das Licht der LED die Frontscheibe durchstrahlt und von der unterhalb der LED in einem Gehäuse des Scanners angeordneten Fotodiode detektiert werden kann. Dies führt zu einer Frontscheibe in Form eines Kegelstumpfmantels, wobei diese Form einen zusätzlichen Platzbedarf erzeugt.

Es ist die Aufgabe der Erfindung, ein Verfahren anzugeben, welches eine zuverlässige und genaue Abschätzung eines Verunreinigungsgrades einer Frontscheibe einer optischen Erfassungsvorrichtung erlaubt und mit verringertem Aufwand durchgeführt werden kann, sowie eine optische Erfassungsvorrichtung zu schaffen, bei der eine Abschätzung eines Verunreinigungsgrads der Frontscheibe mit hoher Zuverlässigkeit und Genauigkeit und mit verringertem konstruktivem Aufwand möglich ist.

Zur Lösung dieser Aufgabe ist ein Verfahren mit den Merkmalen des Anspruchs 1 vorgesehen.

Das erfindungsgemäße Verfahren umfasst das Erzeugen eines gemittelten Empfangssignals mit einer Vielzahl von Abtastwerten aus den mehreren aus den Sendestrahlungspulsen erzeugten Empfangssignalen, wobei zum Ermitteln eines Abtastwerts des gemittelten Empfangssignals jeweils diejenigen Abtastwerte der Empfangssignale addiert werden, die zu einander entsprechenden Zeitpunkten ermittelt wurden, und das Erzeugen wenigstens eines Frontscheibenverunreinigungswerts durch Auswerten eines Amplitudenwerts und/oder eines Peakform-Messwerts des gemittelten Empfangssignals.

Im Rahmen der Erfindung wurde erkannt, dass aus einem Amplitudenwert und/oder Peakform-Messwert eines gemittelten Empfangssignals, dessen Abtastwerte durch Addieren der einander zeitlich entsprechenden Abtastwerte der einzelnen, jeweils aus einem Sendestrahlungspuls erzeugten Empfangssignale generiert werden, eine zuverlässige und genaue Aussage über eine Verunreinigung der Frontscheibe abgeleitet werden kann. Der Erfindung liegt der Gedanke zugrunde, mehrere zu verschiedenen Sendestrahlungspulsen gehörige Empfangssignale zu einem gemittelten Empfangssignal zusammenzufassen und dabei in Bezug auf die Verunreinigungsabschätzung die durch die Vielzahl von ausgesendeten Sendestrahlungspulsen theoretisch ermöglichte örtliche und/oder zeitliche Auflösung der optischen Erfassungsvorrichtung zunächst bewusst hintan zu stellen.

Dem liegt die Überlegung zugrunde, dass sich eine Verunreinigung der Frontscheibe über den zwischen zwei benachbarten Sendestrahlungspulsen liegenden zeitlichen und/oder örtlichen Abstand in aller Regel nur unwesentlich verändert. Eine solche Verunreinigung führt in dem gemittelten Empfangssignal deshalb zu einer für die Verunreinigung charakteristischen Veränderung eines die Frontscheibe repräsentierenden Frontscheibenpeaks, während Störeffekte wie Rauschen unterdrückt werden, sodass sich ein aussagekräftiges und gut auswertbares Nutzsignal ergibt.

Durch Auswerten eines Amplitudenwerts und/oder eines Peakform-Messwerts des gemittelten Empfangssignals ist deshalb eine Abschätzung einer Verunreinigung der Frontscheibe mit hoher Genauigkeit und Zuverlässigkeit möglich.

Da der Verunreinigungsgrad durch die Auswertung von Sendestrahlungspulsen abgeschätzt wird, die von der Frontscheibe zurückgeworfen werden, ist es nicht erforderlich, zusätzliche LEDs oder einen zusätzlichen Fotoempfänger vorzusehen, der in Abstrahlungsrichtung betrachtet hinter der Frontscheibe liegt, sodass auf das Bereitstellen und die Montage dieser Komponenten verzichtet und der mit ihrem Betrieb einhergehende zusätzliche Energieverbrauch vermieden werden kann. Außerdem kann auf eine Schrägstellung der Frontscheibe verzichtet werden und somit ein geringerer Bauraum für die optische Erfassungsvorrichtung gewährleistet werden.

Bei Erkennen einer Verunreinigung oder Überschreiten eines vorgegebenen Verunreinigungsgrades anhand des erzeugten Frontscheibenverunreinigungswerts kann z.B. eine für einen Benutzer wahrnehmbare Warnmeldung ausgegeben werden.

Im vorliegenden Text werden die Begriffe "Licht" bzw. "Strahlung" nicht nur für sichtbares Licht, sondern auch für Strahlung anderer Wellenlänge, z.B. ultraviolett oder infrarot, verwendet.

Vorteilhafte Ausführungsformen der Erfindung sind in den Unteransprüchen, der Beschreibung und den Figuren beschrieben.

Gemäß einer vorteilhaften Ausgestaltung des Verfahrens wird eine Abweichung des zumindest einen Frontscheibenverunreinigungswerts von einem zuvor eingelernten Sollwert ermittelt, um einen Verschmutzungsgrad der Frontscheibe abzuschätzen. Ein solcher Sollwert kann für den Amplitudenwert, für den Peakform-Messwert oder für beides eingelernt werden.

Zum Erzeugen des Frontscheibenverunreinigungswerts kann zunächst ein Frontscheibenpeak in dem gemittelten Empfangssignal identifiziert werden. Hierzu kann nach einem Peak des gemittelten Empfangssignals innerhalb eines Frontscheibenzeitintervalls gesucht werden, welches dem Zeitintervall entspricht, in dem ausgehend von einem Sendezeitpunkt eines Sendestrahlungspulses ein Empfang von von der Frontscheibe zurückgestrahlter Strahlung des Sendestrahlungspulses erwartet wird.

An einem so ermittelten Peak kann beispielsweise eine Formanalyse durchgeführt werden oder eine Amplitude des Peaks ermittelt werden.

Die Auswertung des gemittelten Empfangssignals kann auch die Anwendung einer Korrelation und/oder Regression auf die Abtastwerte des gemittelten Empfangssignals umfassen.

Das Verfahren eignet sich z.B. zur Verwendung mit einer nach dem Lichtlaufzeitprinzip arbeitenden optischen Erfassungsvorrichtung. Hierbei wird bei Erkennung eines Objekts der Abstand des Objekts anhand der zwischen der Aussendung des Sendestrahlungspulses und dem Empfangen der von dem Objekt zurückgeworfenen Strahlung vergangenen Zeit ermittelt. Die ermittelte Lichtlaufzeit wird durch die Lichtgeschwindigkeit und durch zwei (um den Hin- und Rückweg des Lichts zu berücksichtigen) geteilt, um den Objektabstand zu erhalten. Die Lichtlaufzeit kann über eine Messung des zeitlichen Abstands zwischen der Aussendung des Sendestrahlungspulses und einer charakteristischen Eigenschaft eines das Objekt repräsentierenden Peaks, zum Bespiel dessen Spitze, gewonnen werden.

Ein wie hierin beschriebenes, über mehrere Sendestrahlungspulse gemitteltes Empfangssignal kann nicht nur verwendet werden, um eine Verunreinigung der Frontscheibe abzuschätzen, sondern auch zur Detektion von hinter der Frontscheibe in dem Überwachungsbereich der optischen Erfassungsvorrichtung befindlichen Objekten, d.h. das durch die Pulsmittelung erzeugte gemittelte Empfangssignal wird zur Objektdetektion verwendet und enthält zu diesem Zweck auch solche Abtastwerte, die die gemittelte Rückstrahlung aus dem hinter der Frontscheibe befindlichen Überwachungsbereich repräsentieren.

Prinzipiell kann mit dem erfindungsgemäßen Verfahren auch eine Vielzahl von sehr kurzen Sendestrahlungspulsen aussendet werden, die insbesondere in einem sehr kurzen zeitlichen Abstand aufeinander folgen, bzw. eine optische Erfassungsvorrichtung eingesetzt werden, die eine solche Vielzahl von Sendestrahlungsbündeln aussendet. Dabei werden bewusst Sendestrahlungspulse mit einer relativ geringen Strahlungsleistung und ein Empfänger mit einer relativ geringen Empfindlichkeit verwendet, was zu einem Empfangssignal eines Sendestrahlungspulses führt, das ein relativ geringes Signal-Rausch-Verhältnis aufweist. Das zu erwartende Signal-Rausch-Verhältnis ist so gering, dass anhand eines einzelnen Sendestrahlungspulses keine zuverlässige Auswertung möglich ist, da das zugehörige Empfangssignal im Rauschen im Wesentlichen untergeht. Durch die Erzeugung eines wie hierin beschriebenen gemittelten Empfangssignals aus einer Vielzahl von Sendestrahlungspulsen kann jedoch der Rauscheinfluss statistisch so weit eliminiert werden, dass in Form des gemittelten Empfangssignals ein gut auswertbares Nutzsignal gewonnen wird. Vorteilhaft ist bei dieser Ausgestaltung insbesondere, dass aufgrund der geringeren notwendigen Strahlungsleistung eines Sendestrahlungspulses und/oder Empfindlichkeit des Empfängers deutlich kleinere und kostengünstigere Bauelemente verwendet werden können, die eine noch weiter gehende Miniaturisierung der optischen Erfassungsvorrichtung bei gleichzeitig zuverlässiger Frontscheibenüberwachung ermöglichen.

Das Verfahren wird mit einem Laserscanner eingesetzt, wobei während eines einen Scanwinkel überstreichenden Scans die Sendestrahlungspulse in verschiedenen in einer Scanrichtung aufeinanderfolgenden Richtungen in dem Erfassungsbereich gelenkt werden.

Das gemittelte Empfangssignal wird dann aus den Empfangssignalen erzeugt, die zu den zeitlich aufeinander folgend ausgesendeten Sendestrahlungspulsen gehören.

Gemäß der Erfindung werden während eines Scans pro 1° Scanwinkel wenigstens 40 aufeinanderfolgende Sendestrahlungspulse in den Erfassungsbereich ausgesendet. Prinzipiell kann die Anzahl der Sendestrahlungspulse pro 1° Scanwinkel auch 100 oder mehr betragen. Durch eine solche Anzahl von Sendestrahlungspulsen kann für die Verunreinigungsabschätzung trotz der vorgesehenen Mittelung eine hohe örtliche Auflösung in Scanrichtung erzielt werden. Ein gemitteltes Empfangssignal wird aus wenigstens 40, wenigstens 100 oder mehr Empfangssignalen erzeugt, in welchem Fall sich eine örtliche Auflösung der Verunreinigungsabschätzung in Scan-Richtung in der Größenordnung von einem Grad Scanwinkel ergibt.

Prinzipiell können über einen Teilbereich des Scanwinkels der optischen Erfassungsvorrichtung hinweg die Abtastwerte der erzeugten Empfangssignale addiert werden. Durch Addition der erzeugten Empfangssignale nur über einen Teilbereich des Scanwinkels kann eine ortsaufgelöste Verunreinigungsabschätzung realisiert werden. Das heißt, eine Verunreinigung, die sich nicht über den gesamten Scanwinkel auf der Frontscheibe erstreckt oder zumindest nicht über den gesamten Scanwinkel homogen ist, kann ortsaufgelöst erkannt werden.

Ebenso können über den gesamten Scanwinkelbereich der optischen Erfassungsvorrichtung hinweg die Abtastwerte der erzeugten Empfangssignale addiert werden. Wenn in das gemittelte Empfangssignal die Abtastwerte der über den gesamten Scanwinkelbereich hinweg erzeugten Empfangssignale eingehen, ist über den gesamten Scanwinkel hinweg betrachtet eine besonders genaue Abschätzung des Verunreinigungsgrads der Frontscheibe möglich.

Die in dem gemittelten Empfangssignal enthaltenen Abtastwerte können prinzipiell als gleitende Mittelwerte aus den Abtastwerten einer vorgegebenen Anzahl der zuletzt erzeugten Empfangssignale berechnet werden.

Gemäß einer vorteilhaften Ausgestaltung des Verfahrens umfasst jedes Empfangssignal wenigstens 10, vorzugsweise 50 Abtastwerte, die in einem auf den Aussendezeitpunkt des jeweiligen Sendestrahlungspulses folgenden Frontscheibenzeitintervall liegen, wobei das Frontscheibenzeitintervall dem Zeitintervall entspricht, in dem ein Empfang von von der Frontscheibe zurückgestrahlter Strahlung des Sendestrahlungspulses erwartet wird.

Prinzipiell ergibt sich die Zeit, in der solche Strahlung erwartet wird, als Zeitintervall und nicht als einzelner Zeitpunkt, da die ausgesendeten Sendestrahlungspulse insbesondere nicht beliebig kurz sind, sondern eine zeitliche Ausdehnung besitzen, was dazu führt, dass die zeitlich am frühesten ausgesendete Vorderfront eines Sendestrahlungspulses früher auf den Empfänger trifft als die am spätesten ausgesendete Rückfront. In das Frontscheibenzeitintervall kann außerdem eine Ungenauigkeit über die Kenntnis des genauen Sendezeitpunkts eines Sendestrahlungspulses einfließen.

Durch das Erzeugen von wenigstens von 50 Abtastwerten eines Empfangssignals in dem Frontscheibenzeitintervall kann eine ausreichende zeitliche Auflösung gewährleistet werden, um einen Frontscheibenpeak mit hoher Genauigkeit auswerten zu können.

Eine weitere vorteilhafte Ausgestaltung des Verfahrens sieht vor, dass der zeitliche Abstand zweier aufeinanderfolgender Abtastwerte eines Empfangssignals weniger als oder gleich 1 Nanosekunde, insbesondere weniger als oder gleich 625 Pikosekunden, beträgt. Auf diese Weise kann auch bei Verwendung von sehr kurzen Pulsen als Sendestrahlungspulse, deren zeitliche Ausdehnung beispielsweise im Bereich von 1 bis 10 Nanosekunden beträgt, eine ausreichende zeitliche Auflösung gewährleistet werden, um für die Abschätzung der Frontscheibenverunreinigung eine aussagekräftige Analyse eines Frontscheibenpeaks bzw. von dessen Amplitude und/ oder Form zu ermöglichen.

Zusätzlich zu der Abschätzung eines Verunreinigungsgrades der Frontscheibe lässt sich das gemittelte Empfangssignal auch zur Funktionsüberprüfung der optischen Erfassungsvorrichtung verwenden. So kann durch Überprüfen des gemittelten Empfangssignals auf Vorhandensein eines Frontscheibenpeaks festgestellt werden, ob die optische Erfassungsvorrichtung prinzipiell funktionstüchtig ist oder nicht. Insbesondere kann dazu eine sich aus dem gemittelten Empfangssignal bzw. einem Frontscheibenpeak ergebende Distanzmessung für die Frontscheibe mit einem erwarteten Wert verglichen werden. Wird kein Frontscheibenpeak erkannt oder eine abweichende Frontscheibendistanz ermittelt, kann z.B. eine für einen Benutzer wahrnehmbare Warnmeldung erzeugt werden, um anzuzeigen, dass die Vorrichtung defekt ist. Auf eine gesonderte Referenzzielmessung und das Vorsehen eines eigenen Referenzobjekts der optischen Erfassungsvorrichtung kann dann verzichtet werden, da die Frontscheibe selbst als Referenzobjekt fungiert.

Weiterer Gegenstand der Erfindung ist eine optische Erfassungsvorrichtung mit den Merkmalen des Anspruchs 9. Die erfindungsgemäße optische Erfassungsvorrichtung ist insbesondere zur Durchführung eines wie vorstehend beschriebenen erfindungsgemäßen Verfahrens ausgebildet. Die vorstehend in Bezug auf das erfindungsgemäße Verfahren beschriebenen vorteilhaften Ausführungsformen und Vorteile können analog in der erfindungsgemäßen optischen Erfassungsvorrichtung realisiert sein.

Erfindungsgemäß ist die optische Erfassungsvorrichtung als Laserscanner ausgebildet. Die optische Erfassungsvorrichtung umfasst eine Ablenkeinrichtung wie zum Beispiel einen Spiegel, um während eines einen Scanwinkel überstreichenden Scans die Sendestrahlungspulse in verschiedenen in einer Scanrichtung aufeinanderfolgenden Richtungen in den Erfassungsbereich zu lenken.

Die optische Erfassungsvorrichtung kann ein Field Programmable Gate Array (FPGA) umfassen, das zur Erzeugung der Abtastwerte der Empfangssignale und des gemittelten Empfangssignals ausgebildet ist. Bevorzugt findet von der Erzeugung der Abtastwerte der Empfangssignale bis zur Erzeugung des Frontscheibenverunreinigungswerts alles in demselben FPGA statt. Im Rahmen der Erfindung kann ein und dasselbe FPGA sowohl zur Abschätzung der Frontscheibenverunreinigung als auch zu einer Detektion von im Erfassungsbereich der optischen Erfassungsvorrichtung vorhandenen Objekten verwendet werden.

Nachfolgend wird die Erfindung beispielhaft anhand einer vorteilhaften Ausführungsform unter Bezugnahme auf die beigefügte schematische Figur beschrieben. Es zeigen:

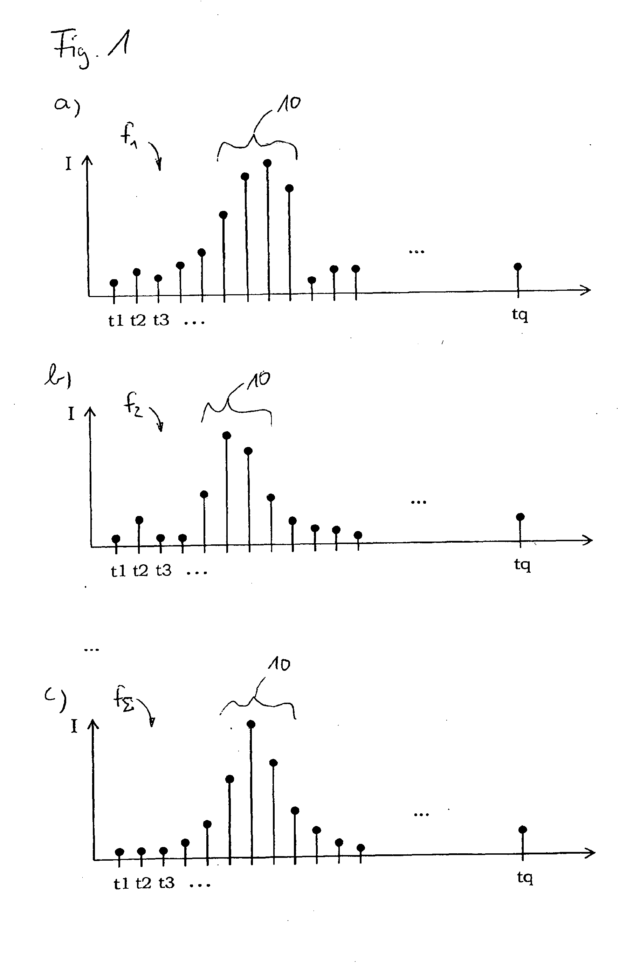

Fig. 1a  ein erstes beispielhaftes aus einem Sendestrahlungspuls erzeugtes Empfangssignal mit einer Vielzahl von q Abtastwerten;

Fig. 1b  ein zweites beispielhaftes aus einem Sendestrahlungspuls erzeugtes Empfangssignal mit einer Vielzahl von q Abtastwerten; und

Fig. 1c  ein beispielhaftes gemitteltes (und normiertes) Empfangssignal mit einer Vielzahl von q Abtastwerten.

Fig. 1a zeigt ein erstes Empfangssignal f1, welches aus einem Sendestrahlungspuls erzeugt worden ist und welches eine Vielzahl von q Abtastwerten f1 (t1) bis f1 (tq) umfasst, wobei ein Abtastwert f1 (tj), j=1... q, jeweils die Intensität I der empfangenen Rückstrahlung des Sendestrahlungspulses zu einem Zeitpunkt tj in einem vorgegebenen zeitlichen Abstand von der Aussendung des Sendestrahlungspulses (t = 0) anzeigt. Stellvertretend sind in Fig. 1a nur einige Abtastwerte f1(tj) gezeigt. In der Realität kann die Anzahl q der Abtastwerte fi(tj), j= 1... q, pro Empfangssignal fi, i= 1... p, weitaus größer sein. Fig. 1b zeigt ein zweites Empfangssignal f2, welches aus einem auf den ersten Sendestrahlungspuls folgend ausgesendeten zweiten Sendestrahlungspuls erzeugt wurde.

Die in Fig. 1a und 1b gezeigten Empfangssignale f1 und f2 stehen stellvertretend für mehrere Empfangssignale fi, i=1 ... p, die zu aufeinanderfolgend ausgesendeten Sendestrahlungspulsen gehören und deren Abtastwerte fi(tj), i= 1 ... p, j=1...q, aufgezeichnet und zur Erzeugung eines in Fig. 1c gezeigten gemittelten Empfangssignals fΣ verwendet werden. Die Abtastwerte fi(tj) werden im vorliegenden Beispiel durch eine Analog-DigitalWandlung erzeugt und als digitale Werte abgespeichert.

Das gemittelte Empfangssignal fΣ umfasst ebenfalls q Abtastwerte fΣ:(t1) bis fΣ:(tq), wobei jeder Abtastwert fΣ (tj), j=1...q, durch Addieren derjenigen Abtastwerte f1(tj) bis fp(tj) erzeugt wird, die zu einander entsprechenden Zeitpunkten tj ermittelt wurden, das heißt

$$f\Sigma(t1) = f1(t1) + f2(t1) + ... + fp(t1),$$

$$f\Sigma(t2) = f1(t2) + f2(t2) + ... + fp(t2),$$

$$...$$

$$f\Sigma(tq) = f1(tq) + f2(tq) + ... + fp(tq).$$

Jedes Empfangssignal fi, i =1... p weist einen mehr oder weniger deutlichen Frontscheibenpeak 10 in einem Frontscheibenzeitintervall des Empfangssignals fi, i = 1... p auf. Wie in Fig. 1c sichtbar, weist das gemittelte Empfangssignal fΣ einen sehr charakteristischen Frontscheibenpeak 10 auf. Durch Auswerten eines Amplitudenwerts und/oder eines Peakform-Messwerts des gemittelten Empfangssignals fΣ wird wenigstens ein Frontscheibenverunreinigungswert erzeugt, der mit einem zuvor eingelernten Sollwert verglichen wird, um mit hoher Zuverlässigkeit und Genauigkeit einen Verunreinigungsgrad der Frontscheibe abzuschätzen.

**Bezugszeichenliste**

10  Frontscheibenpeak

f1, f2    Empfangssignal

f$\Sigma$    gemitteltes Empfangssignal

I    Intensität

t    Zeit

t1... tq    Zeitpunkt

## Patentansprüche

1. Verfahren zur Abschätzung eines Verunreinigungsgrads einer Frontscheibe einer optischen Erfassungsvorrichtung, welche als Laserscanner ausgebildet ist, welches die Schritte umfasst:

- Aussenden von mehreren (p) Sendestrahlungspulsen in einen Erfassungsbereich, wobei während eines einen Scanwinkel überstreichenden Scans die Sendestrahlungspulse in verschiedenen in einer Scan-Richtung aufeinander folgenden Richtungen in den Erfassungsbereich ausgesendet werden,
- für jeden Sendestrahlungspuls Erzeugen eines Empfangssignals (f1, f2), welches eine Vielzahl (q) von Abtastwerten umfasst, wobei ein Abtastwert jeweils die Intensität (I) der empfangenen Rückstrahlung des jeweiligen Sendestrahlungspulses zu einem Zeitpunkt (t1... tq) in einem vorgegebenen zeitlichen Abstand von der Aussendung des Sendestrahlungspulses anzeigt,
- Erzeugen eines gemittelten Empfangssignals (f$\Sigma$) mit einer Vielzahl (q) von Abtastwerten aus den mehreren aus den aufeinander folgend in verschiedenen Richtungen ausgesendeten Sendestrahlungspulsen erzeugten Empfangssignalen (f1, f2), wobei zum Ermitteln eines Abtastwerts des gemittelten Empfangssignals (f$\Sigma$) jeweils diejenigen Abtastwerte der Empfangssignale (f1, f2) addiert werden, die zu einander entsprechenden Zeitpunkten (t1...tq) ermittelt wurden, und
- Erzeugen wenigstens eines Frontscheibenverunreinigungswerts durch Auswerten wenigstens eines Werts aus der Gruppe, die aus einem Amplitudenwert und einem Peakform-Messwert des gemittelten Empfangssignals (f$\Sigma$) besteht,

wobei während eines Scans pro 1° Scanwinkel wenigstens 40 aufeinander folgende Sendestrahlungspulse in den Erfassungsbereich ausgesendet werden und das gemittelte Empfangssignal (f$\Sigma$) aus wenigstens 40 der aus den Sendestrahlungspulsen erzeugten Empfangssignale (f1, f2) erzeugt wird und
wobei die Strahlungsleistung der Sendestrahlungspulse und die Empfindlichkeit eines zum Erzeugen der Empfangssignale (f1, f2) verwendeten Empfängers zu Empfangssignalen (f1, f2) führen, deren Signal-Rausch-Verhältnis so gering ist, dass anhand des Empfangssignals (f1, f2) eines einzelnen Sendestrahlungspulses jeweils keine zuverlässige Auswertung möglich wäre, da das zu dem Sendestrahlungspuls gehörige Empfangssignal (f1, f2) im Rauschen im Wesentlichen untergeht.

2. Verfahren nach Anspruch 1,
**dadurch gekennzeichnet, dass**
eine Abweichung des zumindest einen Frontscheibenverunreinigungswerts von einem zuvor eingelernten Sollwert ermittelt wird, um einen Verschmutzungsgrad der Frontscheibe abzuschätzen.

3. Verfahren nach Anspruch 1 oder 2,
**dadurch gekennzeichnet, dass**
zur Ermittlung des wenigstens einen Frontscheibenverunreinigungswerts ein Peak (10) des gemittelten Empfangssignals (f$\Sigma$) identifiziert und ausgewertet wird.

4. Verfahren nach zumindest einem der vorstehenden Ansprüche,
**dadurch gekennzeichnet, dass**
die Abtastwerte der erzeugten Empfangssignale (f1, f2) über einen Teilbereich des Scanwinkels der optischen Erfassungsvorrichtung hinweg addiert werden.

5. Verfahren nach zumindest einem der Ansprüche 1 bis 3,
**dadurch gekennzeichnet, dass**

die Abtastwerte der erzeugten Empfangssignale (f1, f2) über den gesamten Scanwinkelbereich der optischen Erfassungsvorrichtung hinweg addiert werden.

6. Verfahren nach zumindest einem der vorstehenden Ansprüche,
**dadurch gekennzeichnet, dass**
jedes Empfangssignal (f1, f2) wenigstens 10, vorzugsweise 50 Abtastwerte umfasst, die in einem auf den Aussendezeitpunkt des jeweiligen Sendestrahlungspulses folgenden Frontscheibenzeitintervall liegen, wobei das Frontscheibenzeitintervall einem Zeitintervall entspricht, in dem ein Empfang von von der Frontscheibe zurückgestrahlter Strahlung des Sendestrahlungspulses erwartet wird.

7. Verfahren nach zumindest einem der vorstehenden Ansprüche,
**dadurch gekennzeichnet, dass**
der zeitliche Abstand zweier aufeinander folgender Abtastwerte eines Empfangssignals (f1, f2) weniger als oder gleich 1 ns, insbesondere weniger als oder gleich 625 ps, beträgt.

8. Verfahren nach zumindest einem der vorstehenden Ansprüche,
**dadurch gekennzeichnet, dass**
durch Überprüfen des gemittelten Empfangssignals auf das Vorhandensein oder die Lage eines Frontscheibenpeaks festgestellt wird, ob die optische Erfassungsvorrichtung prinzipiell funktionstüchtig ist oder nicht, wobei vorzugsweise eine für einen Benutzer wahrnehmbare Warnmeldung ausgegeben wird, wenn festgestellt wird, dass die optische Erfassungsvorrichtung nicht funktionstüchtig ist.

9. Optische Erfassungsvorrichtung, insbesondere zur Durchführung eines Verfahrens nach zumindest einem der vorstehenden Ansprüche, die dazu ausgebildet ist,

- mehrere (p) Sendestrahlungspulse in einen Erfassungsbereich auszusenden,
- für jeden Sendestrahlungspuls ein Empfangssignal (f1, f2) zu erzeugen, welches eine Vielzahl (q) von Abtastwerten umfasst, wobei ein Abtastwert jeweils die Intensität (I) der empfangenen Rückstrahlung des jeweiligen Sendestrahlungspulses zu einem Zeitpunkt (t1...tq) in einem vorgegebenen zeitlichen Abstand von der Aussendung des Sendestrahlungspulses anzeigt, wobei die optische Erfassungsvorrichtung als Laserscanner ausgebildet ist und eine Ablenkeinrichtung umfasst, um während eines einen Scanwinkel überstreichenden Scans die Sendestrahlungspulse in verschiedenen in einer Scan-Richtung aufeinander folgenden Richtungen in den Erfassungsbereich zu lenken, wobei die optische Erfassungsvorrichtung ferner dazu ausgebildet ist:
- ein gemitteltes Empfangssignal (f$\Sigma$) mit einer Vielzahl (q) von Abtastwerten aus den mehreren aus den aufeinander folgend in verschiedenen Richtungen ausgesendeten Sendestrahlungspulsen erzeugten Empfangssignalen (f1, f2) zu erzeugen, wobei zum Ermitteln eines Abtastwerts des gemittelten Empfangssignals (f$\Sigma$) jeweils diejenigen Abtastwerte der Empfangssignale (f1, f2) addiert werden, die zu einander entsprechenden Zeitpunkten (t1...tq) ermittelt wurden, und
- durch Auswerten wenigstens eines Werts aus der Gruppe, die aus einem Amplitudenwert und einem Peakform-Messwert des gemittelten Empfangssignals (f$\Sigma$) besteht, wenigstens einen Frontscheibenverunreinigungswert zu erzeugen,

wobei während eines Scans pro 1° Scanwinkel wenigstens 40 aufeinander folgende Sendestrahlungspulse in den Erfassungsbereich ausgesendet werden und das gemittelte Empfangssignal (f$\Sigma$) aus wenigstens 40 der aus den Sendestrahlungspulsen erzeugten Empfangssignale (f1, f2) erzeugt wird und
wobei die Strahlungsleistung der Sendestrahlungspulse und die Empfindlichkeit eines zum Erzeugen der Empfangssignale (f1, f2) verwendeten Empfängers zu Empfangssignalen (f1, f2) führen, deren Signal-Rausch-Verhältnis so gering ist, dass anhand des Empfangssignals (f1, f2) eines einzelnen Sendestrahlungspulses jeweils keine zuverlässige Auswertung möglich ist, da das zu dem Sendestrahlungspuls gehörige Empfangssignal (f1, f2) im Rauschen im Wesentlichen untergeht.

10. Optische Erfassungsvorrichtung nach Anspruch 9,
**dadurch gekennzeichnet, dass**
die optische Erfassungsvorrichtung ein FPGA (field programmable gate array) umfasst, das zur Erzeugung der Abtastwerte der Empfangssignale (f1, f2) und des gemittelten Empfangssignals (f$\Sigma$) ausgebildet ist.

**Claims**

1. A method of estimating a degree of contamination of a front screen of an optical detection apparatus configured as a laser scanner, which comprises the steps:

   - transmitting a plurality (p) of transmission radiation pulses into a detection zone; with the transmission radiation pulses being transmitted into the detection zone in different directions following one another in a scan direction during a scan sweeping over the scan angle;
   - generating a reception signal (f1, f2) for each transmission radiation pulse which includes a plurality (q) of sampled values, wherein a sampled value respectively indicates the intensity (I) of the received back radiation of the respective transmission radiation pulse at a point in time (t1...tq) at a predefined time interval from the transmission of the transmission radiation pulse;
   - generating an averaged reception signal (f$\Sigma$) having a plurality (q) of sampled values from the plurality of reception signals (f1, f2) generated from the transmission radiation pulses transmitted following one another in different directions, with those respective sampled values of the reception signals (f1, f2) being added which were determined at mutually corresponding points in time (t1...tq) to determine a sampled value of the averaged reception signal (f$\Sigma$); and
   - generating at least one front screen contamination value by evaluating at least one value from the group comprising an amplitude value and a measured peak shape value of the averaged reception signal (f$\Sigma$),

   wherein at least 40 mutually following transmission radiation pulses are transmitted into the detection zone per 1° scan angle during a scan and the averaged reception signal (f$\Sigma$) is generated from at least 40 of the reception signals (f1, f2) generated from the transmission radiation pulses; and
   wherein the radiation power of the transmission radiation pulses and the sensitivity of a receiver used for generating the received signals (f1, f2) result in reception signals (f1, f2) whose signal-to-noise ratio is so small that no respective reliable evaluation would be possible with reference to the reception signal (f1, f2) of an individual transmission radiation pulse since the reception signal (f1, f2) belonging to the transmission radiation pulse is substantially lost in the noise.

2. A method in accordance with claim 1,
   **characterized in that**
   a deviation of the at least one front screen contamination value from a previously taught desired value is determined to estimate a degree of contamination of the front screen.

3. A method in accordance with claim 1 or claim 2,
   **characterized in that**
   a peak (10) of the averaged reception signal (f$\Sigma$) is identified and evaluated for determining the at least one front screen contamination value.

4. A method in accordance with at least one of the preceding claims,
   **characterized in that**
   the sampled values of the generated reception signals (f1, f2) are added over a part range of the scan angle of the optical detection apparatus.

5. A method in accordance with at least one of the claims 1 to 3,
   **characterized in that**
   the sampled values of the generated reception signals (f1, f2) are added over the total range of the scan angle of the optical detection apparatus.

6. A method in accordance with at least one of the preceding claims,
   **characterized in that**
   each reception signal (f1, f2) includes at least 10, preferably 50, sampled values which lie in a front screen time interval following the transmission point in time of the respective transmission radiation pulse, with the front screen time interval corresponding to a time interval in which a reception of radiation of the transmission radiation pulse radiated back from the front screen is expected.

7. A method in accordance with at least one of the preceding claims,
   **characterized in that**

the time interval of two mutually following sampled values of a reception signal (f1, f2) amounts to less than or equal to 1 ns, in particular less than or equal to 625 ps.

8. A method in accordance with at least one of the preceding claims,
   **characterized in that**
   it is determined by checking the averaged reception signal for the presence or the position of a front screen peak whether the optical detection apparatus is operational or not in principle, with preferably a warning message perceivable for a user being output when it is found that the optical detection apparatus is not operational.

9. An optical detection apparatus, in particular for performing a method in accordance with at least one of the preceding claims, which is designed

   - to transmit a plurality (p) of transmission radiation pulses into a detection zone;
   - to generate a reception signal (f1, f2) for each transmission radiation pulse which includes a plurality (q) of sampled values, wherein a sampled value respectively indicates the intensity (I) of the received back radiation of the respective transmission radiation pulse at a point in time (t1...tq) at a predefined time interval from the transmission of the transmission radiation pulse,
   wherein the optical detection apparatus is designed as a laser scanner and includes a deflection device to direct the transmission radiation pulses into the detection zone in different directions following one another in a scan direction during a scan sweeping over a scan angle,
   wherein the optical detection apparatus is furthermore designed:
   - to generate an averaged reception signal (f$\Sigma$) having a plurality (q) of sampled values from the plurality of reception signals (f1, f2) generated from the transmission radiation pulses transmitted following one another in different directions, with those sampled values of the reception signals (f1, f2) in each case being added for determining a sampled value of the averaged reception signal (f$\Sigma$) which were determined at mutually corresponding points in time (t1...tq); and
   - to generate at least one front screen contamination value by evaluating at least one value of the group comprising an amplitude value and a measured peak shape value of the averaged reception signal (f$\Sigma$);
   wherein at least 40 mutually following transmission radiation pulses are transmitted into the detection zone per 1° scan angle during a scan and the averaged reception signal (f$\Sigma$) is generated from at least 40 of the reception signals (f1, f2) generated from the transmission radiation pulses; and wherein the radiation power of the transmission radiation pulses and the sensitivity of a receiver used for generating the received signals (f1, f2) result in reception signals (f1, f2) whose signal-to-noise ratio is so small that no respective reliable evaluation would be possible with reference to the reception signal (f1, f2) of an individual transmission radiation pulse since the reception signal (f1, f2) belonging to the transmission radiation pulse is substantially lost in the noise.

10. An optical detection apparatus in accordance with claim 9,
    **characterized in that**
    the optical detection apparatus includes an FPGA (field programmable gate array) which is designed for generating the sampled values of the reception signals (f1, f2) and of the averaged reception signal (f$\Sigma$).

**Revendications**

1. Procédé pour estimer un degré de salissure d'une vitre frontale d'un dispositif de détection optique, qui est réalisé sous forme de scanner à laser, le procédé comprenant les étapes consistant à :

   émettre plusieurs impulsions (p) d'un rayonnement d'émission vers une zone de détection, et pendant un scannage couvrant un angle de scannage les impulsions du rayonnement d'émission sont émises vers la zone de détection dans différentes directions qui se suivent mutuellement dans une direction de scannage,
   - on engendre pour chaque impulsion du rayonnement d'émission un signal de réception (f1, f2), qui inclut une pluralité (q) de valeurs de palpage, telles qu'une valeur de palpage indique respectivement l'intensité (I) du rayonnement reçu en retour de l'impulsion respective du rayonnement émis à un instant (t1, ..., tq) à une distance temporelle prédéterminée de l'émission de l'impulsion du rayonnement d'émission,
   - on génère un signal de réception moyenné (f$\Sigma$) avec une pluralité (q) de valeurs de palpage à partir de plusieurs signaux de réception (f1, f2) engendrés à partir des impulsions du rayonnement émis qui sont émises en succession dans différentes directions, et pour déterminer une valeur de palpage du signal de réception moyenné (f$\Sigma$) on additionne respectivement celles des valeurs de palpage des signaux de réception (f1, f2) qui ont été déterminées à des instants mutuellement correspondants (t1, ..., tq), et

- on engendre au moins une valeur de salissure de la vitre frontale par évaluation d'au moins une valeur provenant du groupe qui est constitué par une valeur d'amplitude et par une valeur de mesure de forme de pointe du signal de réception moyenné (f∑),

dans lequel pendant un scannage on émet à chaque angle de scannage de un degré au moins 40 impulsions mutuellement successives du rayonnement d'émission vers la zone de détection, et le signal de réception moyenné (f∑) est engendré à partir d'au moins 40 des signaux de réception (f1, f2) engendrés à partir des impulsions du rayonnement d'émission, et

dans lequel la puissance de rayonnement des impulsions du rayonnement émis et la sensibilité d'un récepteur utilisé pour engendrer les signaux de réception (f1, f2) mènent à des signaux de réception (f1, f2) dont le rapport signal/bruit est si faible qu'aucune évaluation fiable serait possible au moyen du signal de réception (f1, f2) d'une impulsion individuelle du rayonnement d'émission, étant donné que le signal de réception (f1, f2) associé à l'impulsion du rayonnement d'émission disparaît sensiblement dans le bruit.

**2.** Procédé selon la revendication 1,
**caractérisé en ce que** l'on détermine un écart de ladite au moins une valeur de salissure de la vitre frontale par rapport à une valeur de consigne auparavant apprise, afin de d'estimer un degré de salissure de la vitre frontale.

**3.** Procédé selon la revendication 1 ou 2,
**caractérisé en ce que** pour déterminer ladite au moins une valeur de salissure de la vitre frontale on identifie et on évalue un pic (10) du signal de réception moyenné (f∑).

**4.** Procédé selon l'une au moins des revendications précédentes,
**caractérisé en ce que** les valeurs de palpage des signaux de réception engendrés (f1, f2) sont additionnées sur une plage partielle de l'angle de scannage du dispositif de détection optique.

**5.** Procédé selon l'une au moins des revendications 1 à 3,
**caractérisé en ce que** les valeurs de palpage des signaux de réception engendrés (f1, f2) sont additionnées sur la totalité de la plage des angles de scannage du dispositif de détection optique.

**6.** Procédé selon l'une au moins des revendications précédentes,
**caractérisé en ce que** chaque signal de réception (f1, f2) comprend au moins 10 et de préférence 50 valeurs de palpage, qui tombent dans un intervalle temporel de vitre frontale qui suit l'instant d'émission de l'impulsion respective du rayonnement d'émission, et l'intervalle temporel de la vitre frontale correspond à un intervalle temporel dans lequel on attend une réception du rayonnement, rayonné en retour par la vitre frontale, de l'impulsion du rayonnement d'émission.

**7.** Procédé selon l'une au moins des revendications précédentes,
**caractérisé en ce que** l'écart temporel de deux valeurs de palpage mutuellement successives d'un signal de réception (f1 , f2) est inférieur ou égal à 1 ns, en particulier inférieur ou égal à 625 ps.

**8.** Procédé selon l'une au moins des revendications précédentes,
**caractérisé en ce qu'**en vérifiant le signal de réception moyenné quant à la présence ou à la situation d'un pic de vitre frontale on constate si le dispositif de détection optique est en principe capable de fonctionner ou non, et on délivre de préférence un message d'avertissement perceptible pour un utilisateur lorsqu'on constate que le dispositif de détection optique n'est pas capable de fonctionner.

**9.** Dispositif de détection optique, en particulier pour la mise en oeuvre d'un procédé selon l'une au moins des revendications précédentes, qui est réalisé :

- pour émettre plusieurs impulsions (p) d'un rayonnement d'émission vers une zone de détection,
- pour engendrer, pour chaque impulsion du rayonnement d'émission, un signal de réception (f1, f2), qui inclut une pluralité (q) de valeurs de palpage, et une valeur de palpage indique respectivement l'intensité (I) du rayonnement renvoyé reçu de l'impulsion respective du rayonnement d'émission à un instant (t1, ..., tq) à un écart temporel prédéterminé de l'émission de l'impulsion du rayonnement d'émission, dans lequel le dispositif de détection optique est réalisé comme un scanner à laser et inclut un système de déflexion afin de faire dévier, pendant un scannage qui balaye un angle de scannage, l'impulsion du rayonnement d'émission dans différentes directions mutuellement successives dans une direction de scannage, vers la zone de détection, dans lequel le dispositif de détection optique est en outre réalisé pour :

- engendrer un signal de réception moyenné (f$\Sigma$) avec une pluralité (q) de valeurs de palpage à partir de plusieurs signaux de réception (f1 , f2) engendrés à partir des impulsions du rayonnement d'émission qui sont émises en succession dans différentes directions, et pour déterminer une valeur de palpage du signal de réception moyenné (f$\Sigma$) on additionne respectivement celles des valeurs de palpage des signaux de réception (f1, f2) qui ont été déterminées à des instants mutuellement correspondants (t1, ..., tq), et

- engendrer au moins une valeur de salissure de la vitre frontale par évaluation d'au moins une valeur parmi le groupe qui est constitué par une valeur d'amplitude et par une valeur de mesure de forme du pic du signal de réception moyenné (f$\Sigma$),

et pendant un scannage on émet à chaque angle de scannage de un degré au moins 40 impulsions de rayonnement d'émission qui se suivent mutuellement vers la zone de détection, et le signal de réception moyenné (f$\Sigma$) est engendré à partir d'au moins 40 des signaux de réception (f1, f2) engendrés à partir des impulsions du rayonnement d'émission, et

dans lequel la puissance du rayonnement des impulsions de rayonnement d'émission et la sensibilité d'un récepteur, utilisé pour engendrer les signaux de réception (f1, f2) mènent à des signaux de réception (f1, f2) dont le rapport signal/bruit est aussi faible qu'aucune évaluation fiable n'est possible au moyen du signal de réception (f1, f2) d'une impulsion individuelle du rayonnement d'émission, étant donné que le signal de réception (f1, f2) associé à l'impulsion du rayonnement d'émission disparaît sensiblement dans le bruit.

10. Dispositif de détection optique selon la revendication 9,
**caractérisé en ce que** le dispositif de détection optique inclut un FPGA (field programmable gate array), qui est réalisé pour engendrer les valeurs de palpage des signaux de réception (f1, f2) et le signal de réception moyenné (f$\Sigma$).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2182378 A1
- WO 2008154736 A1

- US 20020018198 A1
- US 20100128248 A1